**Europäisches Patentamt**

(19) **European Patent Office**

**Office européen des brevets**

(11) Publication number : **0 338 673 B1**

(12) ## EUROPEAN PATENT SPECIFICATION

(45) Date of publication of patent specification :
30.09.92 Bulletin 92/40

(51) Int. Cl.⁵ : **B25J 9/10, B25J 15/10**

(21) Application number : **89302488.5**

(22) Date of filing : **14.03.89**

(54) **Robot gripper having auxiliary degrees of freedom.**

(30) Priority : **22.04.88 US 185066**

(43) Date of publication of application :
**25.10.89 Bulletin 89/43**

(45) Publication of the grant of the patent :
**30.09.92 Bulletin 92/40**

(84) Designated Contracting States :
**CH DE FR GB IT LI SE**

(56) References cited :
**EP-A- 0 149 806
DE-A- 3 618 391
DE-A- 3 627 560
US-A- 3 935 950
US-A- 4 697 838**

(56) References cited :
**US-A- 4 707 013
IBM TECHNICAL DISCLOSURE BULLETIN.
vol. 27, no. 7B, December 1984, NEW YORK US
page 4472 NICHOLLS: "CENTERING
MECHANISM FORROBOT DISK HOLDER"**

(73) Proprietor : **BECKMAN INSTRUMENTS, INC.
Executive Office 2500 Harbor Boulevard Box
3100
Fullerton California 92634 (US)**

(72) Inventor : **Bjornson, Torlief Ove
2306 Avenida de Guadalupe
Santa Clara California 95054 (US)**

(74) Representative : **Sorrell, Terence Gordon et al
Fitzpatricks 4 West Regent Street
Glasgow G2 1RS Scotland (GB)**

EP 0 338 673 B1

## Description

The present invention relates to a robot hand module attachable to an end of a robot arm comprising: a frame; means mounted to the frame for performing one or more robotic operations; and a mounting base for mounting said frame to a distel end of a robot arm.

A gripper, adapted for gripping circular work pieces or work pieces having a circular bore is disclosed in US-A-4 627 654. Said patent discloses a support plate, a plurality of articulated parallelograms which are disposed in planes converging toward a common axis, each of the parallelograms including a first arm parallel to the common axis which is movable by means of an axial piston in a direction parallel to the axis and another arm provided with rollers disposed on each side of the support which is extendable or retractable in response to movement of the first arm. This latter extensible arm is also provided with fingers for clamping the work piece when the extensible arm is either extended or retracted.

A device is disclosed in US-A-4 566 845, having a pair of fingers which can be displaced to grasp an article to be handled, each finger being formed by a support and a contactor plate which contacts the article. The gripper is provided with several degrees of freedom including rotational movement about a spindle axis the translation of the contact plate and rotation of the contact plate about its axis. Compressable displacement measuring pick ups deliver information associated with their deformation related to the force of an object about these three degrees of motion.

The above mentioned patents are examples of useful grippers having degrees of freedom which provide flexibility for robots. The needs of each of robot must be considered individually.

A cylindrical robot is typically provided with a vertical shaft on a support base which supports a horizontal arm. Various end-effectors or hands may be attached to the end of the robot arm. The robot arm may move either up or down on the vertical shaft, may rotate about the vertical shaft or may extend or retract in order to access various locations on a table or other work space. In order to allow the hand of the robot to grasp objects in the work space, it is necessary for the robot to be able to orient its gripping elements with respect to the objects. Whereas anthropomorphic robots having joints structured like human shoulders, elbows and wrists have sufficient degrees of freedom to orient the hand in a direction suitable to grab objects, cylindrical robots are not usually provided with these degrees of freedom. Even anthropomorphic robots may need an extra degree of freedom, for greater flexibility or precision.

A problem with many prior art grippers is that their utility is limited because they are driven from the robot arm. This requires that the gripper has connectors which mate with a specific robot arm for both electrical and mechanical functions. In other words, the gripper-robot interface is cumbersome.

It is an object of the present invention to provide a robot hand or gripper having supplemental degrees of freedom to those already found on robots with a simple gripper-robot interface, so as to enable the gripper to grasp objects of any orientation on a work space, with fine precision, regardless of the type of robot arm to which it is attached.

According to the present invention, there is provided a robot module of the aforesaid type, characterised in that the mounting base and the frame are coupled at a pivot joint configured for rotation of the frame about an axis transverse to a longitudinal axis of the robot arm to which the mounting base is mounted; and the mounting base is mounted to the end of mechanical coupling between the frame and the robot arm for causing rotation of the frame at the pivot joint such that the frame can rotate independently of the control of the robot arm, said frame having electric motor means for causing said frame to rotate at the pivot joint.

An advantage of the invention is that a very simple gripper interface may be used with a robot, since no mechanical drive needs to be transferred to the gripper, yet the gripper has supplemental degrees of freedom.

The invention will now be described by way of example only, with reference to the accompanying drawings, in which:-

Figure 1 is a perspective view of a robot gripper of the present invention, attachable to a robot arm and capable of grasping a work piece with figures;

Figure 2 is a cutaway perspective of the gripper shown in Figure 1, without its fingers;

Figure 3 to 8 are respective top, front, partial bottom cutaway, left side, bottom and rear plan views of the gripper of Figure 1, without its fingers, in which Figures 3 and 5 illustrate possible motions of the gripper.

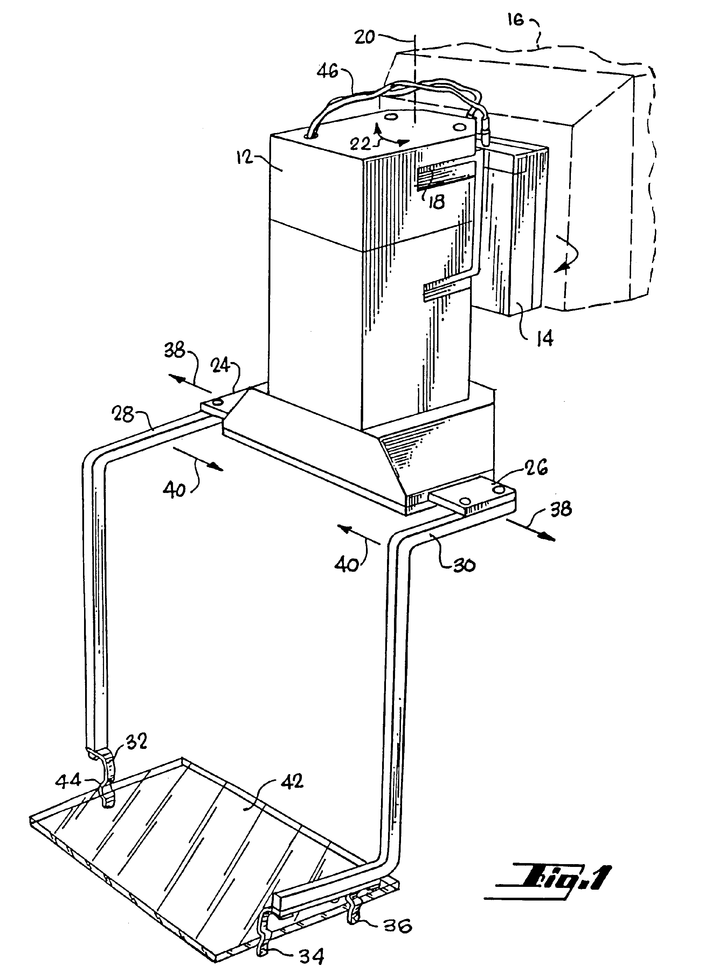

With reference to Figure 1, a robot hand or gripper of the present invention includes a frame or housing 12 pivotally connected to a mount 14 which is mechanically attachable to a robot arm 16, by simple removable connection. Frame or housing 12 is rotatable about a pivot axis 20 through joint 18, as indicated by arrows 22. The pivot rotation allows the hand of the robot to access a variously oriented objects on a work space. Extending from the housing 12 are a pair of bars or plates 24 and 26 from which rods 28 and 30 extend downwardly. A first rod 28 terminates in a finger or thumb 32. A second rod 30 terminates in a pair of fingers 34 and 36, thus, plate 24, rod 28 and thumb 32 together constitute a first group of fingers, while bar 26, rod 30 and fingers 34 and 36 together constitute a second group of fingers. The two groups of fingers are extendable or retractable from housing 12 by moving plates 24 and 26 out of or into the housing 12. Arrows 38 indicate that the two groups of fingers may be extended outwardly from the housing 12, enabling the two groups of fingers to separate from one another. Likewise, arrows 40 indicate that the two groups of fingers may be retracted into housing 12, enabling the fingers to close upon one another. Each of the fingers is provided with an indentation 44 or other feature enabling it to grasp a work piece 42 on a work space. The motion of the two groups of fingers, as well as the pivotting of the housing 12 on its mount 14, are coordinated with the robot arm, but use separate control channels. Wires 46 leading into the housing 12 may be attached to robot arm 16 through mount 14 or may be attached to an external source not associated with the robot arm 16. Wires 46 bring in electrical power and control signals and may also transmit position information to the robot arm 16 or an external source.

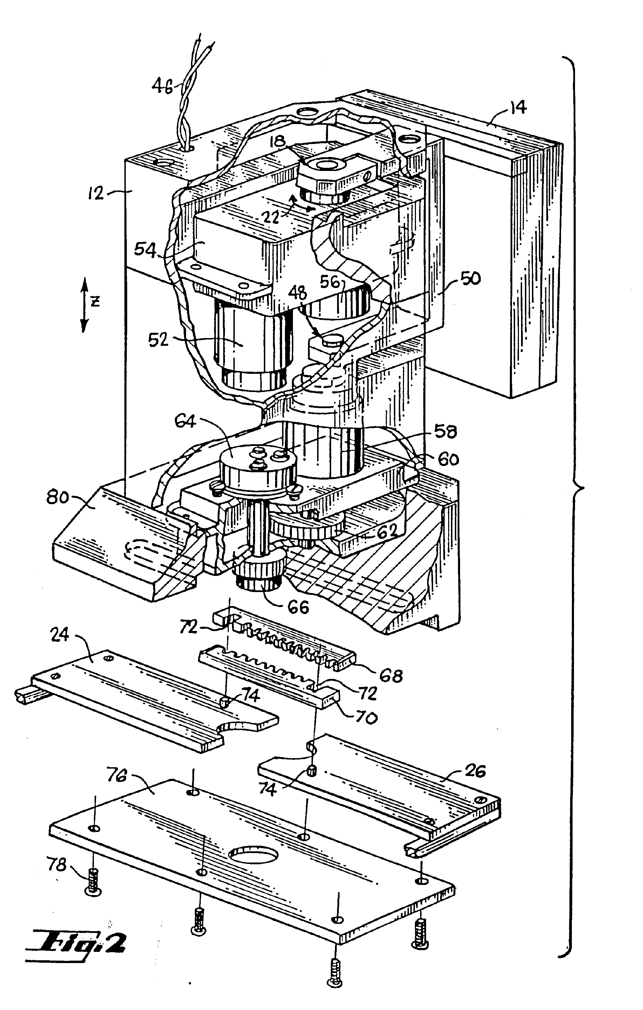

Referring to Figure 2, housing 12 is pivotably attached to mount 14, via joints 18 and 48. Mount 14 has a bracket 50 extending into housing 12 and terminating at joints 18 and 48. A motor 52, which may be either a servo or a stepper motor, operates gears in a gear cage 54 so as to cause housing 12 to pivot on its axis about joints 18 and 48. Pivoting about a vertical axis between joints 18 and 48 defines a $\theta$ axis degree of freedom. A potentiometer 56 may be used as position detector to indicate the actual amount of pivoting taking place. Motor 52 receives power and instructions via wires 46.

Also included inside housing 12 is a second motor 58 operating gears 62 in a gear cage 60. A pinion gear 66 communicating with gears 62 in gear cage 60 meshes with a pair of racks 68 and 70 disposed on opposite sides of pinion 66. Racks 68 and 70 have notches 72 which fit around pins 74 protruding from plates 24 and 26. Plates 24 and 26 are held within a base 80 of housing 12 and supported by a backplate 76 secured to base 80 by screws 78. Rotation by pinion 66 in response to action of motor 58 causes racks 68 and 70 to move in opposite directions and thereby causes plates 24 and 26 to extend outward from housing 12 or retract into housing 12 depending on the direction of pinion gear rotation. A potentiometer 64 is disposed with respect to gear cage 60 and pinion 66 so as to measure the amount of rotation of pinion gear 66 and therefore the amount of extension or retraction of plates 24 and 26. As already noted, extension or retraction of plates 24 and 26 cause a likewise extension or retraction of rods 28 and 30 and groups of fingers 32, 34 and 36.

The entire housing is made to raise or lower relative to the mounting point with the addition of another motor, as indicted by arrow Z in Fig. 2. This additional degee of feedom, Z motion parallel to the pivot axis, allows elevational corrections to be made, complementing the angular motion achieved by pivoting about an axis. This motor would be controlled in similar fashion to the first motor described above. The Z degree of freedom is considered to be an additional degree of freedom, even if the robot already possesses a Z motion degree of freedom.

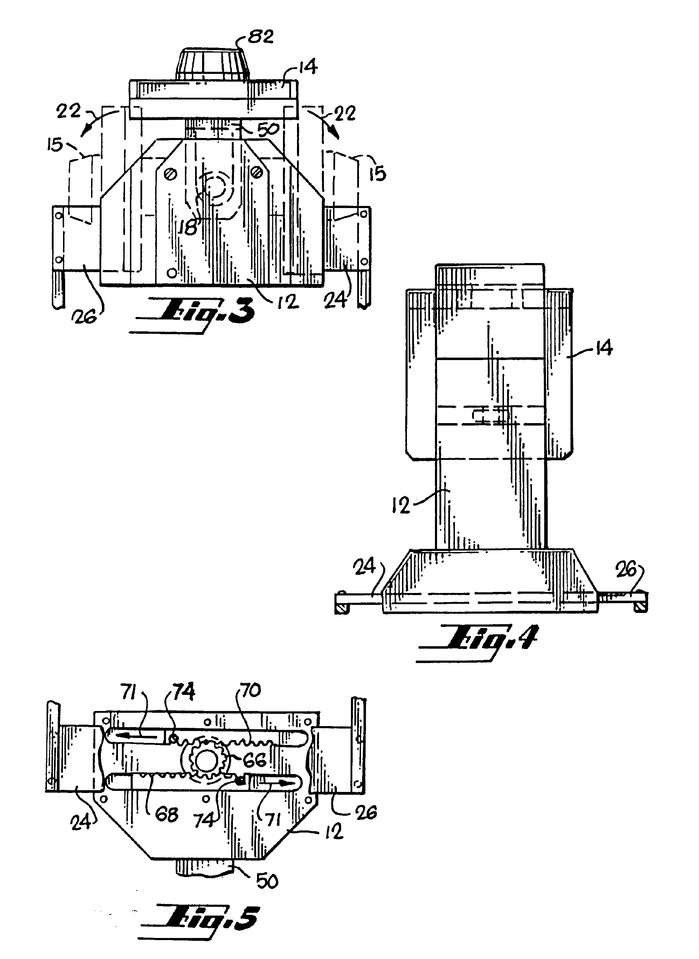

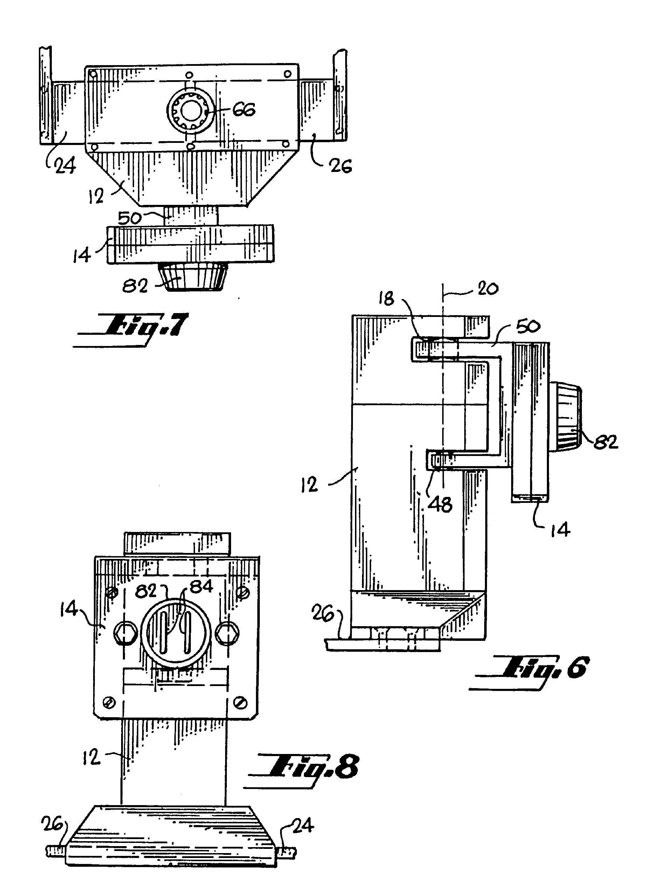

With reference to Figs. 3-8, the robot gripper's housing 12 pivots on an axis 20 through joints 18 and 48 so as to orient itself with respect to an object to be picked up. This is indicated in Fig. 3 by arrows 22 and phantom positions 15 for mount 14. Though Fig. 3 appears to show rotation of mount 14, mount 14 is in actuality fixed to a robot arm and housing 12 rotates. In addition to pivoting, the gripper also extends and retracts fingers for picking up an object. Referring to Figs. 5 and 7, the pinion gear 66 meshes with racks 68 and 70 so that when pinion gear 66 rotates counterclockwise, racks 68 and 70 move in the directions indicated by arrow 71. When pinion gear 66 rotates in the opposite direction, that is clockwise, racks 68 and 70 move in the directions opposite to that indicated by arrow 71. Since plates 24 and 26 are attached to racks 68 and 70 via pins 74, rotation of pinion gear 66 causes the groups of finger attached to plates 24 and 26 to move away from each other or toward one another.

As seen in Figs. 3, 6, 7 and 8, mount 14 may include knobs 82 or other appendages to enable it to attach to a specified robot arm. Such appendages may also have electrical interconnections 84 for transmitting electrical power or control signals to or from the robot arm and the gripper. However, in the present invention, such electrical interconnections are optional as the pivoting elements within the gripper may act independently of the robot arm with electrical connections to some external controller, or to the same controller with an independent data channel. The control of the axis of the hand must be coordinated with the motion of the primary robot, but the axis is designed as an auxiliary axis to provide additional flexibility to the robot.

The present invention provides several degrees of freedom within the robot hand or gripper which are additional to any degrees of freedom found in a robot arm. These additional degrees of freedom allow very fine control of a hand, as opposed to the relatively coarse control available from the main robot. Because the hand is often subject to bending moments due to its position at the end of an extended arm, such fine control is desirable. Thus, the hand or gripper of the present invention can be used with many types of robot arms including cylindrical robots with only a few degrees of freedom and anthropomorphic robots with many degrees of freedom. The present invention may be considered a second robot attached to the distal end of the arm of a first robot. Further, the finger structure shown in Fig. 1 with a single finger or thumb 32 in one group of fingers and a pair of fingers 34 and 36 in a second group of fingers, enables the gripper to pick up many sizes and shapes of objects. The gripper is especially adapted, however, for picking up rectangular flat objects, such as object 42 in Fig. 1, and circular flat objects securely.

In the present application, a robot wrist is considered as part of the arm and not the hand. Many robots have multiple degrees of freedom associated with a robot wrist. The present invention provides degrees of freedom supplemental to those degrees of freedom of the wrist, plus others found in robot arms.

## Claims

1. A robot hand module attachable to an end of a robot arm, comprising
   a frame (12);
   means (24 to 36) mounted to said frame for performing one or more robotic operations; and a mounting base (14) for mounting said frame to a distal end of a robot arm (16);
   characterised in that the mounting base (14) and the frame (12) are coupled at a pivot joint (18, 48) configured for rotation of the frame (12) about an axis (20) transverse to a longitudinal axis of the robot arm (16) to which the mounting base (14) is mounted; and in that the mounting base (14) is mounted to the end of the robot arm (16) in a manner such that there is no mechanical coupling between the frame (12) and the robot arm (16) for causing rotation of the frame (12) at the pivot joint (18, 48) such that the frame can rotate independently of the control by the robot arm (16), said frame having electric motor means (52) for causing said frame (12) to rotate at the pivot joint (18, 48).

2. A robot hand module according to claim 1, characterised in that the means (24 to 36) for performing robotic operations comprises means for gripping objects.

3. A robot hand module according to claim 1 or 2, characterised by a plurality of motors (52, 58) mounted in fixed positions within the frame (12) each of said motors (52, 58) being controllable separately from the robot arm (16) for coordination with the arm, each motor (52, 58) being associated with an auxiliary degree of freedom of the frame (12) which is supplemental to and distinct from any degree of freedom associated with motion of the robot arm (16), one degree of freedom of the frame (12) being said rotation about said pivot axis (20) defined through said pivot joint (18, 48) said plurality of motors including a first motor (52) and a second motor (58), said first motor being disposed in fixed relation to the pivot joint (18, 48) for pivoting said frame (12) about said pivot axis (20) independent of control by the robot arm (16), wherein said means (24 to 36) for performing robotic operations comprise means extending from said frame for gripping objects, and further including means (66, 68, 70) disposed in the frame (12) and associated with said second motor (58) for operating said means (24 to 36) for gripping independently of said robot arm (16).

4. A robot hand module according to claim 3, characterised in that said motors (52, 58) are stepper motors.

5. A robot hand module according to claim 3 or 4 characterised in that said means (24 to 36) for gripping comprises two opposed groups of fingers adapted for handling a work piece, said second motor (58) being disposed in fixed relation to said means (66, 68, 70) for operating so as to be capable of causing movement of said two opposed groups of fingers in opposite directions.

6. A robot hand module according to claim 5, characterised in that said means for operating comprises a pinion gear (66) disposed in communication with said second motor (58) so as to be rotatable thereby and two racks (68, 70) mechanically linked to respective opposed groups of fingers, said rack (68, 70) meshing with the pinion gear (66) on opposite sides thereof, whereby said opposed groups of fingers move in opposite directions in response to rotation of the pinion gear (66).

7. A robot hand module according to claim 5 or claim 6, characterised in that said opposed groups of fingers comprise a first group of two fingers and a second group having a thumb opposed to the first group.

8. A robot hand module according to any of claims 4 to 7, characterised in that another of said auxiliary degrees of freedom of said frame (12) is a translation along said pivot axis (20), the robot gripper further comprising means disposed in the frame (12) and associated with one of said plurality of motors for translating said frame (12) and associated with one of said plurality of motors for translating said frame (12) parallel to said pivot axis (20) independently of any robot arm motions.

9. A robot hand module according to any preceding claim, characterised in that said mounting base (14) comprises a mount mechanically attachable to a robot arm (16) and a bracket (50) attached to said mount and extending into said frame (12), said bracket (50) pivotally supporting said frame (12) at said pivot joint (18, 48).

**Patentansprüche**

1. Roboterhand-Modul zur Befestigung am Ende eines Roboterarms, umfassend

einen Rahmen (12);

an dem Rahmen montierte Mittel (24 bis 36) zur Ausführung einer oder mehrerer Roboteroperation(en); sowie ein(en) Befestigungs-Grundteil bzw. -sockel (14) zur Befestigung des genannten Rahmens am distalen oder freien Ende eines Roboterarms (16);

dadurch **gekennzeichnet,** daß das Befestigungsgrundteil (14) und der Rahmen (12) miteinander über eine Gelenkverbindung (18,48) gekulppelt sind, die zur Rotation des Rahmens (12) um eine Achse (20) ausgebildet ist, welche in Richtung quer zur einer Längsachse des Roboterarms (16), an welchem das Befestigungs-Grundteil (14) montiert ist, verläuft; und daß das Befestigungs-Grundteil (14) am Ende des Roboterarms (16) in solcher Weise montiert bzw. befestigt ist, daß keine mechanische Kupplung zwischen dem Rahmen (12) und dem Roboterarm (16) zur Bewirkung einer Rotation des Rahmens (12) an der Gelenkverbindung (18,48) besteht, derart daß der Rahmen unabhängig von der Steuerung durch den Roboterarm (16) rotieren kann, wobei der Rahmen elektrische Motormittel (52) aufweist, um eine Rotation des Rahmens (12) an der Gelenkverbindung (18,48) zu bewirken.

2. Roboterhand-Modul nach Anspruch 1, dadurch **gekennzeichnet,** daß die Mittel (24 bis 36) zur Ausführung von Roboteroperationen Mittel zum Greifen von Objekten umfassen.

3. Roboterhand-Modul nach Anspruch 1 oder 2, **gekennzeichnet** durch mehrere jeweils in fester Lage innerhalb des Rahmens (12) angeordnete Motoren (52,58), die getrennt von dem Roboterarm (16) zur Koordination mit dem Arm steuerbar sind, wobei jeweils jeder Motor (52,58) einem zusätzlichen oder Hilfs-Freiheitsgrad des Rahmens (12) zugeordnet ist, der verschieden von und zusätzlich zu jeglichen der Bewegung des Roboterarms zugeordneten Freiheitsgraden ist, wobei ein Freiheitsgrad des Rahmens (12) die genannte Rotation um die genannte, durch die genannte Gelenk- bzw. Schwenkverbindung (18,48) definierte Schwenkachse (20) ist und die genannten mehreren Motoren einen ersten Motor (52) und einen zweiten Motor (58) umfassen, wobei der genannte erste Motor bezüglich der Schwenkverbindung (18,48) fest angeordnet ist zur Verdrehung bzw. Verschwenkung des genannten Rahmens (12) um die genannte Schwenkachse (20), unabhängig von einer Steuerung durch den Roboterarm (16), wobei die genannten Mittel (24 bis 36) zur Durchführung von Roboteroperationen sich von dem genannten Rahmen aus erstreckende Mittel zum Greifen von Objekten umfassen, und des weiteren umfassend Mittel (66,68,70), die in dem Rahmen (12) angeordnet sind und dem genannten zweiten Motor (58) zugeordnet sind, zur Betätigung der genannten Mittel (24 bis 36) zum Greifen, unabhängig von dem genannten Roboterarm (16).

4. Roboterhand-Modul nach Anspruch 3, dadurch **gekennzeichnet,** daß die genannten Motoren (52,58) Schrittschaltmotoren sind.

5. Roboterhand-Modul nach Anspruch 3 oder 4, dadurch **gekennzeichnet,** daß die genannten Mittel (24 bis 36) zum Greifen zwei gegenüberliegende Gruppen von zur Handhabung eines Werkstücks ausgebildeten Fingern umfassen, wobei der genannte zweite Motor (58) fest bezüglich der genannten Betätigungsmittel (66,68,70) angeordnet ist, um eine Bewegung der beiden genannten gegenüberliegenden Gruppen von Fingern in entgegengesetzten Richtungen zu ermöglichen.

6. Roboterhand-Modul nach Anspruch 5, dadurch **gekennzeichnet,** daß die genannten Betätigungsmittel ein in Verbindung mit dem genannten zweiten Motor (58) zur Drehung durch diesen angeordnetes Zahnritzel sowie zwei mechanisch mit entsprechend gegenüberliegend angeordneten Fingergruppen verbundene Zahnstangen (68,70) umfassen, wobei die genannten Zahnstangen (68,70) mit dem Zahnritzel (66) auf dessen gegenüberliegenden Seiten kämmen, derart daß die genannten gegenüberliegenden Gruppen von Fingern sich bei einer Drehung des Zahnritzels (66) in entgegengesetzten Richtungen bewegen.

7. Roboterhand-Modul nach Anspruch 5 oder Anspruch 6, dadurch **gekennzeichnet,** daß die genannten gegenüberliegenden Gruppen von Fingern eine erste Gruppe von zwei Fingern und eine zweite Gruppe mit einem der ersten Gruppe gegenüberliegenden Daumen umfassen.

8. Roboterhand-Modul nach einem der Ansprüche 4 bis 7,
dadurch **gekennzeichnet,**
daß ein weiterer der genannten Hilfs- bzw. zusätzlichen Freiheitsgrade des genannten Rahmens (12) ein Translations-Freiheitsgrad entlang der genannten Schwenkachse (20) ist, wobei der Robotgreifer des weiteren in dem Rahmen (12) angeordnete und einem der genannten mehreren Motoren zugeordnete Mittel aufweist, zur Translations-Bewegung des genannten Rahmens (12) parallel zu der genannten Schwenkachse (20) unabhängig von Bewegungen des Roboterarms.

9. Roboterhand-Modul nach einem der vorhergehenden Ansprüche,
dadurch **gekennzeichnet,**
daß das genannte Montage- bzw. Befestigungsgrundteil (14) eine mechanisch an einem Roboterarm (16) befestigbare Halterung sowie einen an der genannten Halterung befestigten und sich in den genannten Rahmen (12) hinein erstreckenden Winkel (50) umfaßt, wobei der genannte Winkel (50) den genannten Rahmen um die genannte Schwenkverbindung (18,48) schwenkbar haltert.

## Revendications

1- Module de main de robot pouvant être fixé sur une extrémité d'un bras de robot, comprenant
    un châssis (12);
    des moyens (24 à 36) montés sur ledit châssis pour réaliser une ou plusieurs opérations robotisées; et un socle de montage (14) pour monter ledit châssis sur une extrémité distale d'un bras de robot (16);
    caractérisé en ce que le socle de montage (14) et le châssis (12) sont couplés à un joint de pivotement (18, 48) conçu pour la rotation du châssis (12) autour d'un axe (20) transversal à un axe longitudinal du bras de robot (16) sur lequel le socle de montage est monté; et en ce que le socle de montage (14) est monté sur l'extrémité du bras de robot (16) d'une manière telle qu'il n'y a pas de couplage mécanique entre le châssis (12) et le bras de robot (16) pour provoquer la rotation du châssis (12) sur le joint de pivotement (18, 48) de sorte que le châssis puisse tourner indépendamment de la commande du bras de robot (16), ledit châssis possédant des moyens formant moteur électrique (52) pour provoquer la rotation dudit châssis (12) sur le joint de pivotement (18, 48).

2- Module de main de robot selon la revendication 1, caractérisé en ce que les moyens (24 à 36) pour effectuer des opérations robotisées comprennent des moyens pour saisir des objets.

3- Module de main de robot selon la revendication 1 ou 2, caractérisé par une pluralité de moteurs (52, 58) montés dans des positions fixes à l'intérieur du châssis (12), chacun desdits moteurs (52, 58) pouvant être commandé séparément depuis le bras de robot (16) pour coordination avec le bras, chaque moteur (52, 58) étant associé à un degré auxiliaire de liberté du châssis (12) qui est supplémentaire à et distinct de tout degré de liberté associé au mouvement du bras de robot (16), un degré de liberté du châssis (12) étant ladite rotation autour dudit axe de pivotement (20) défini par ledit joint de pivotement (18, 48), ladite pluralité de moteurs comprenant un premier moteur (52) et un second moteur (58), ledit premier moteur étant disposé fixe par rapport au joint de pivotement (18, 48) pour faire pivoter ledit châssis (12) autour dudit axe de pivotement (20) indépendamment de la commande par le bras de robot (16), dans lequel lesdits moyens (24 à 36) pour exécuter des opérations robotisées comprennent des moyens s'étendant depuis ledit châssis pour saisir des objets, et comprenant, en outre, des moyens (66, 68, 70) disposés dans le châssis(12) et associés audit second moteur (58) pour actionner lesdits moyens (24 à 36) afin de réaliser une saisie indépendamment dudit bras de robot (16).

4- Module de main de robot selon la revendication 3, caractérisé en ce que lesdits moteurs (52, 58) sont des moteurs pas-à-pas.

5- Module de main de robot selon la revendication 3 ou 4, caractérisé en ce que lesdits moyens (24 à 36) destinés à la saisie comprennent deux groupes opposés de doigts aptes à manipuler une pièce, ledit second moteur (58) étant disposé fixe par rapport auxdits moyens (66, 68, 70) en vue de son fonctionnement, de façon à être capable de provoquer le mouvement desdits deux groupes opposés de doigts dans des directions opposées.

6- Module de main de robot selon la revendication 5, caractérisé en ce que lesdits moyens de fonctionnement comprennent un engrenage à pignon (66) disposé en communication avec ledit second moteur (58) de façon à être entraîné en rotation par celui-ci, et deux crémaillères (68, 70) reliées mécaniquement à des groupes opposés, respectifs de doigts, lesdites crémaillères (68, 70) engrenant avec l'engrenage à pignon (66) sur ses côtés opposés, grâce à quoi lesdites groupes opposés de doigts se déplacent dans des directions opposées en réponse à la rotation de l'engrenage à pignon (66).

7- Module de main de robot selon la revendication 5 ou la revendication 6, caractérisé en ce que lesdits groupes opposés de doigts comprennent un premier groupe de deux doigts et un second groupe ayant un pouce opposé au premier groupe.

8- Module de main de robot selon l'une quelconque des revendications 4 à 7, caractérisé en ce qu'un autre desdits degrés auxiliaires de liberté dudit châssis (12) est une translation le long dudit axe de pivotement (20), la pince de robot comprenant, en outre, des moyens disposés sur le châssis (12) et associés à l'un de ladite pluralité de moteurs pour translater ledit châssis (12) et associés à l'un de ladite pluralité de moteurs pour translater ledit châssis (12) parallèlement audit axe de pivotement (20) indépendamment de tout mouvement de bras du robot.

9- Module de main de robot selon l'une quelconque des revendications précédentes, caractérisé en ce que ledit socle de montage (14) comprend un socle mécaniquement attaché à un bras de robot (16) et un étrier (50) fixé sur ledit socle et s'étendant dans ledit châssis (12), ladite console (50) supportant de façon pivotante ledit châssis (12) sur ledit joint de pivotement (18, 48).

Fig.1

_Fig.2_

Fig.3

Fig.4

Fig.5

*Fig.7*

*Fig.6*

*Fig.8*